## Europäisches Patentamt
## European Patent Office
## Office européen des brevets

(11) Veröffentlichungsnummer: **0 091 538**
**B1**

(12) **EUROPÄISCHE PATENTSCHRIFT**

(45) Veröffentlichungstag der Patentschrift:
**20.11.86**

(21) Anmeldenummer: **83100444.5**

(22) Anmeldetag: **19.01.83**

(51) Int. Cl.⁴: **A 01 F 12/52**

(54) Mähdrescher mit Rückführeinrichtung.

(30) Priorität: **05.04.82 DE 3212694**

(43) Veröffentlichungstag der Anmeldung:
**19.10.83 Patentblatt 83/42**

(45) Bekanntmachung des Hinweises auf die Patenterteilung:
**20.11.86 Patentblatt 86/47**

(84) Benannte Vertragsstaaten:
**BE DE FR**

(56) Entgegenhaltungen:
**WO - A - 81/00503**
**DE - B - 1 199 536**
**DE - U - 1 943 672**
**FR - A - 977 040**
**FR - A - 1 300 061**
**FR - A - 2 285 062**
**GB - A - 1 202 847**
**GB - A - 2 022 381**
**US - A - 4 177 820**

(73) Patentinhaber: **Klöckner-Humboldt-Deutz AG**
**Zweigniederlassung Fahr, D-7702 Gottmadingen (DE)**

(72) Erfinder: **Griemert, Heinz, Mozartstrasse 4,**
**D-8882 Gundelfingen (DE)**
Erfinder: **Höfflinger, Werner Dr., Auf dem Rade 11,**
**D-3003 Ronnenberg 3 (DE)**
Erfinder: **Ott, Ernst, Juraweg 13, D-8881 Wittislingen**
**(DE)**
Erfinder: **Ritter, Erwin, Haus-Nr. 58,**
**D-8881 Untermedlingen (DE)**

(74) Vertreter: **Haft, Berngruber, Czybulka,**
**Hans-Sachs-Strasse 5, D-8000 München 5 (DE)**

## Beschreibung

Die Erfindung bezieht sich auf einen Mähdrescher mit einer Dresch- und Trenneinrichtung gemäss dem Oberbegriff des Patentanspruches 1.

Bei derartigen Mähdreschern wird das geschnittene Erntegut, z.B. Getreide, mit einem Schneidwerk geschnitten und anschliessend über ein Fördersystem der Dresch- und Trenneinrichtung z.B. einer Axialdreschmaschine zugeführt. Diese Axialdreschmaschine weist eine oder mehrere in Längsrichtung des Mähdreschers ausgerichtete Dresch- und Trenntrommeln auf, in denen das geschnittene Erntegut in Schraubenlinien um einen Rotor geführt und mit Hilfe von Dreschorganen ausgedroschen wird. Das ausgedroschene und noch Spreu sowie andere kleinere Verunreinigungen enthaltene Korngut fällt durch einen Dreschkorb auf einen Vorbereitungsboden unterhalb der Dreschtrommel, wohingegen das Stroh in Richtung auf das hintere offene Ende der Dreschtrommel geführt wird. Im Stroh enthaltenes Korngut fällt durch Trennsiebe ebenfalls auf den Stufenboden oder direkt auf die Reinigungssiebe, wohingegen das Stroh aus dem hinteren Ende der Dreschmaschine ausgeworfen wird. Auf dem Vorbereitungsboden wird das noch verunreinigte Korngut durch Rüttelbewegungen in Richtung auf dessen Ende transportiert, von wo es nach unten auf eine Siebanordnung fällt. Die Siebanordnung wird von einem Luftstrom eines Reinigungsgebläses durchblasen, durch den die noch in dem Korngut enthaltenen Verunreinigungen, wie Spreu etc. erfasst und nach hinten ausgeblasen werden. Das dabei die Siebe durchfallende gereinigte Korngut wird gesammelt und mit einem Körnerelevator in einen Korntank überführt.

Bei Axialdreschmaschinen werden Vorbereitungsboden und die anschliessenden Siebe in der Regel nicht gleichmässig mit Korngut beschichtet. Dies liegt daran, dass das Dreschgut nicht gleichmässig über den Kreissektor des Dreschkorbes der Axialdreschmaschine ausgedroschen wird, sondern dass sich je nach Drehrichtung Konfiguration des Dreschkorbes und dessen Stellung über die Breite der Nachbereitungseinrichtung aus Vorbereitungsboden und Sieben eine ungleichmässige Verteilung des Korngutes ergibt.

Um die erwähnte Ungleichverteilung zu verhindern, ist es aus der US-A 4 177 820 bekannt, die Dreschtrommel mit ihrer Längsachse in dem Siebkasten nicht in dessen mittlerer Hochebene zu lagern, sondern in Richtung auf eine Wand des Siebkastens verschoben. Gleichzeitig zu dieser unsymmetrischen Lage der Dreschtrommel wird auf der anderen Siebkastenseite ein Prall- bzw. Leitblech vorgesehen, dessen Neigung zur Siebkastenwand eingestellt werden kann. Durch das Prallblech werden die sonst in den Bereich unterhalb dieses Bleches fallenden Körner umgelenkt und auf diejenigen Bereiche des Siebkastens geleitet, die sonst nur unzureichend von der Dreschmaschine beschickt werden. Eine solche Anordnung kann jedoch nur dann ihren Zweck erfüllen, wenn die Axialdreschmaschine etwa über das erste Drittel des Dreschkorbsektors den grössten Anteil von ausgedroschenen Korngut abgibt. Eine solche Ungleichverteilung ist jedoch nicht immer die Regel; vielmehr hängt sie von der Lage der Dreschorgane in der Trommel, der Dreschkorbausführung und auch dessen Einstellung ab. Hinzu kommt, dass eine solche bekannte Einrichtung auch dann nicht voll befriedigen kann, wenn der Mähdrescher starke Seitenneigungen einnimmt, wie dieses bei stark geneigten Feldern etwa in Gebirgsregionen durchaus üblich ist. In einer solchen Mähdrescherlage wird das in der Nachbereitungseinrichtung abgelagerte Korngut unverhältnismässig stark in Richtung auf die Talseite geschichtet, d.h. die ansonsten bereits vorhandene Ungleichverteilung über die Breite der Nachbereitungseinrichtung wird noch verstärkt. Man hat zwar versucht, diese übergrosse Ablagerung von Korngut auf der Talseite durch sogenannte Hangleisten in Grenzen zu halten, die auf dem Vorbereitungsboden in Längsrichtung der Axialdreschmaschine angeordnet sind, und so zumindest ein übermässiges Abgleiten des Korngutes auf dem Vorbereitungsboden auf die Talseite zu verhindern. Auch derartige Hangleisten können jedoch nicht die systembedingte Ungleichverteilung der bekannten Axialdreschmaschine vollständig aufheben, die sich besonders bei starken Seitenneigungen des Mähdreschers bemerkbar macht.

Aus der DE-U 1 943 672 ist ein Mähdrescher mit einer Tangential-Dreschmaschine bekannt, bei der das gesiebte und noch Verunreinigungen enthaltene Korngut einer Nachdruscheinrichtung zugeführt, hier noch ausgedroschen und anschliessend mit Hilfe der Nachdruscheinrichtung, die gleichzeitig als Wurfelevator ausgebildet ist, wieder auf den Vorbereitungsboden zurückgeführt wird. Der in dem Gebrauchsmuster beschriebene Mähdrescher weist zwei derartige Überkehrsysteme aus Nachdruscheinrichtung und Rückführeinrichtung auf, wobei die Austrittsöffnungen der Wurfelevatoren zu beiden Seiten der Siebanordnung und des Vorbereitungsbodens in den Siebkasten münden. Zwar können mit zwei derartigen Überkehrsystemen gewisse Ungleichmässigkeiten der Korngutverteilung auf der Siebanordnung auch bei geringen Hangneigungen ausgeglichen werden, jedoch tritt dieses Problem der ungleichmässigen Beschickung des Vorbereitungsbodens bzw. der Siebanordnung bei Tangential-Dreschmaschinen nur in geringfügigem Umfang auf, während es bei Axialdreschmaschinen durch die Konstruktion selbst bedingt ist. Bei merklichen Seitenneigungen des Mähdreschers wird zudem die Talseite des Vorbereitungsbodens bzw. der Siebanordung verstärkt mit nachgedroschenem Erntegut beschickt, d.h. auf die Seite, die trotz Hangleisten wegen der Seitenneigung bereits übermässig mit Erntegut belegt ist. Der Erfindung liegt die Aufgabe zugrunde, einen Mähdrescher mit einer Dresch- und Trenneinrichtung der eingangs genannten Art so zu verbessern, dass die Nachbereitungseinrichtung einfach und betriebsicher über deren Breite gleichmässig beschickt wird, und dass diese gleichmässige Beschickung auch während starken Seitenneigungen des Mähdreschers, also auch bei Seitenhangarbeit erhalten bleibt.

Diese Aufgabe ist gemäss der Erfindung durch die im kennzeichnenden Teil des Patentanspruches 1 angegebenen Merkmale gelöst.

Gemäss diesen Merkmalen ist die Dreschmaschine demnach mit einem Überkehrsystem ausgerüstet, wobei das von dem Überkehrsystem rückgeführte Korngut mit Hilfe einer Leitvorrichtung gesteuert auf diejenigen Bereiche abgelegt wird, die ungleichmässig von der Dresch- und Trenneinrichtung beschickt werden. In einfacher Weise kann die Dreschmaschinebeidseitig mit je einem Überkehrsystem ausgerüstet werden, welches eine vorzugsweise als Wurfelevator ausgebildete Nachdruscheinrichtung aufweisen. Die von den Nachdruscheinrichtungen ausgehenden Rohre führen in den Siebkasten und sind innerhalb dieses weitergeführt in Richtung auf die zu beschickenden Bereiche, die in diesem Fall an der jeweils gegenüberliegenden Wand der jeweiligen Austrittsöffnung der Wurfelevatoren liegen. Da diese beiden Seitenbereiche in der Regel beim Betrieb des Mähdreschers auf der Ebene zu gering beschickt werden, wird hier zusätzliches Gut abgelagert. Die Summe der Gutströme aus der Dreschmaschine und den Überkehreinrichtungen ergeben so eine über die Breite der Nachbereitungseinrichtung gleichmässige Beschickung, so dass auch das Korngut über die Breite der Siebanordnung gleichmässig verteilt ist und die Siebe gleichmässig belastet. Hierdurch wird das Korn effektiver gereinigt als bei ungleichmässiger Siebbelastung, da die Körner aus dem zu reinigenden Gutstrom besser ausscheiden können.

Durch die Anordnung der Überkehrsysteme zu beiden Seiten der Dreschmaschine mit den geführten Austrittsöffnungen der Wurfelevatoren ergeben auch eine gleichmässige Belastung selbst im Hangbetrieb. Beim Hangbetrieb wird automatisch derjenigen Nachdruscheinrichtung mehr Korn zugeführt, die auf der Talseite der Dreschmaschine liegt, während der hangseitigen Nachdruscheinrichtung nur wenig Gut zugeführt wird. Das von dem talseitigen Überkehrsystem in die Nachbereitungseinrichtung zurückgeführte Gut wird jedoch auf die Hangseite der Nachbereitungseinrichtung zurückgeführt und gleicht dort die geringe Beschickung dieses Bereiches von seiten der Dreschmaschine aus.

Eine weitere Möglichkeit besteht darin, an den Austrittsöffnungen eines beidseitigen Überkehrsystems Leitbleche für das rückgeführte Gut vorzusehen. Diese Leitbleche können dann so verstellt werden, dass das Korngut jeweils gesteuert auf die Bereiche geleitet wird, die von der Dreschmaschine zu gering beschickt werden. Diese Leitbleche oder andere Leitvorrichtungen werden z.B. von Hand eingestellt, um z.B. eine Ungleichverteilung bei Hangarbeit von vorne herein zu verhindern. Ebenso möglich ist auch eine automatische Einstellung, z.B. über einen Neigungsmesser. Die Leitbleche bzw. Leitplatten können z.B. mit Hilfe eines einfachen Schwerkraftpendels automatisch eingestellt werden. Mit solchen Leitblechen ist eine gezielte Beschickung der Nachbereitungseinrichtung möglich.

Bei beidseitigen Überkehrsystemen können die von diesen zurückgeführten Gutströme auch dadurch beeinflusst werden, dass den Rückkehrsystemen selbst unterschiedliche Mengen von rückzuführendem Gut zugeführt werden, d.h. dass der Gesamtüberkehrstrom auf die beiden Überkehrsysteme mit ihren Nachdruscheinrichtungen in vorwählbarer Weise aufgeteilt wird. Diese Aufteilung kann z.B. von Hand etwa vom Führerstand des Mähdreschers aus oder auch automatisch beeinflusst werden. Die automatische Einstellung richtet sich dabei wiederum etwa nach einem Neigungsmesser oder allgemeiner nach der gemessenen Belastung des Stufenbodens bzw. der Siebanordnung jeweils über deren Breite.

Eine weitere einfache Möglichkeit für den Ausgleich der Beschickung der Nachbereitungseinrichtung liegt z.B. darin, den Rotor bei Verwendung einer Axialflussdreschmaschine aussermittig innerhalb des Siebkastens zu setzen und an der gegenüberliegenden Siebkastenwand eine Überkehreinrichtung einmünden zu lassen, deren Austrittsöffnung jeweils auf die noch zu beschickenden Bereiche der Nachbereitungseinrichtung richtbar sind.

Weitere Vorteile und Ausgestaltungen der Erfindung gehen aus den Unteransprüchen in Verbindung mit der nachfolgenden Beschreibung hervor, in der die Erfindung in mehreren Ausführungsbeispielen anhand der Zeichnung näher erläutert ist. In der Zeichnung stellen dar:

Fig. 1 eine teilweise geschnittene Seitenansicht eines Mähdreschers mit einer Axialdreschmaschine, deren ausgedroschenes Gut einer Nachbereitungseinrichtung zugeführt wird und die eine Einrichtung gemäss der Erfindung zum gleichmässigen Beschicken dieser Nachbereitungseinrichtung über deren Breite mit Korngut aufweist;

Fig. 2 einen Schnitt längs der Linie II-II in Figur 1 zur Erläuterung der Wirkungsweise der Einrichtung zum gleichmässigen Beschicken der Nachbereitungseinrichtung, wobei diese Ausgleichseinrichtung ein Überkehrsystem aufweist;

Fig. 3 eine schematische Aufsicht auf die Axialdreschmaschine und das Überkehrsystem zur Darstellung der geometrischen Anordnung der Einzelteile;

Fig. 4 einen schematischen Teilquerschnitt entsprechend einem Teil der Figur 2 durch eine Axialdreschmaschine zur Darstellung eines weiteren Ausführungsbeispiels einer Ausgleichsvorrichtung gemäss der Erfindung;

Fig. 4a und b schematische Darstellungen zur Verteilung des Korngutes auf der Nachbereitungseinrichtung über deren Breite bei einer herkömmlichen Axialdreschmaschine bzw. bei einer Axialdreschmaschine, die mit einer Ausgleichsvorrichtung gemäss der Erfindung ausgerüstet ist;

Fig. 5 einen Querschnitt durch eine Axialdreschmaschine mit einer Ausgleichseinrichtung gemäss einem weiteren Ausführungsbeispiel;

Fig. 6 eine schematische Aufsicht auf die in Figur 5 gezeigte Axialdreschmaschine mit der Ausgleichseinrichtung zur Erläuterung von deren Wirkungsweise.

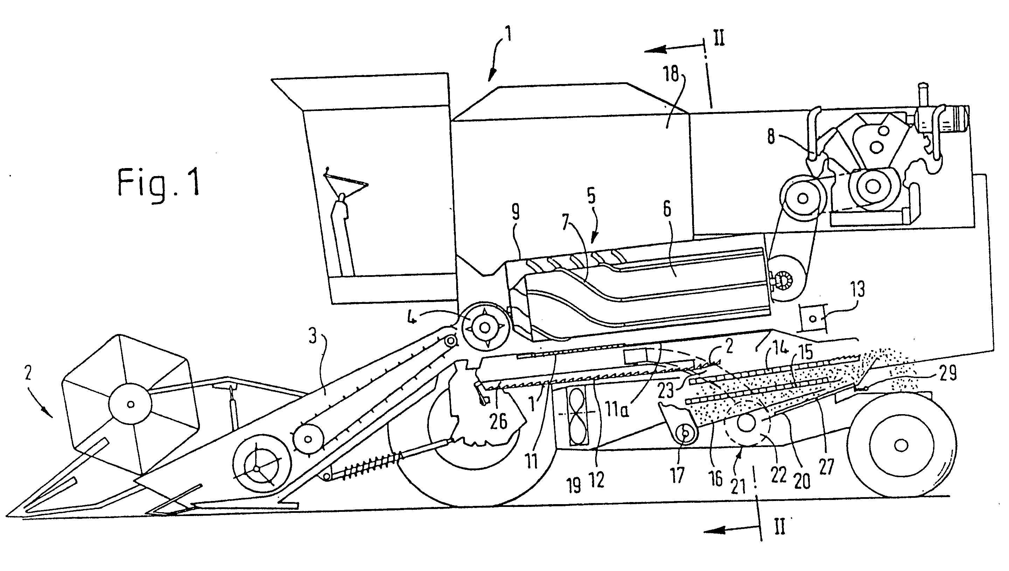

Mit einem in Figur 1 schematisch dargestellten Mähdrescher 1 wird z.B. Getreide mit einem Schneidgerät 2 geschnitten, anschliessend von einem Hochförderer 3 aufgenommen und über eine Zuführwalze 4 einer Axialdreschmaschine 5 zugeführt. Die Axialdreschmaschine weist einen in Längsrichtung des Mähdreschers ausgerichteten, an der Einlaufseite zunächst konischen und anschliessend zylindrischen Rotor 6 auf, an dessen Umfang mehrere Dreschleisten 7 angeordnet sind. Der Rotor rotiert, von einem Motor 8 angetrieben, in einem Dreschtrommelgehäuse 9, welches an den Innenumfang schräggestellte Leitbleche 10 aufweist, die mit den Rotordreschleisten 7 zusammenwirken und das der Dreschtrommel zugeführte Erntegut in Axialrichtung verschieben. Der untere Teil des Trommelgehäuses 9 wird gebildet durch einen Dreschkorb 11 und daran anschliessenden Trennsieben 11a. Durch das Zusammenwirken der Dreschleisten 7 mit dem Dreschkorb 11 werden die Körner ausgedroschen und fallen nach unten durch den Dreschkorb 11 bzw. die Trennsiebe 11a auf einen Vorbereitungsboden 12. Das nicht abgeschiedene Gut, z.B. das Stroh, wird in der Dreschtrommel nach hinten in Richtung auf deren offenes Ende transportiert und dort mittels einer Strohwalze 13 aus dem Mähdrescher geworfen.

Das auf den Vorbereitungsboden 12 fallende Gut besteht im wesentlichen aus bereits ausgedroschenen Körner, kurzen Strohteilen, feiner Spreu und auch nur teilweise ausgedroschenen Getreideähren. Auf dem Vorbereitungsboden, der in Rüttelbewegungen in Richtung seiner Längsachse gehalten wird, wird das darauffallende Gut allmählich in Richtung auf eine Siebanordnung aus hier zwei Sieben 14 und 15 am Ende des Vorbereitungsbodens transportiert. Auch diese Siebe werden in Rüttelbewegung gehalten, so dass das hierauf fallende Gut ebenfalls in Richtung auf die Siebenden transportiert werden.

Die Lochgrösse der Siebe ist so gewählt, dass das Korngut durch die Siebe auf ein Leitblech 16 fallen kann, von dem es einem Kornförderer 17 zugeführt wird, der das Korngut in einen Korntank 18 fördert.

Um das durch die Siebe fallende Korngut von Spreu und anderen kleineren Verunreinigungen zu reinigen, wird die Siebanordnung von dem Luftstrom eines Gebläses 19 durchströmt, der diese Verunreinigungen vom Korngut trennt und nach hinten ausbläst, so dass dem Kornförderer nur reines Korngut zugeführt wird. Wie erwähnt, enthält das in der Axialdreschmaschine ausgedroschene Erntegut noch einen gewissen Anteil nicht vollständig ausgedroschener Ähren und grösserer Verunreinigungen. Diese nur teilweise ausgedroschenen Ähren und Verunreinigungen werden von dem Luftstrom des Gebläses nicht alle fasst, sondern überfliessen das Sieb 14 bzw. 15 und fallen von dessen Enden nach unten auf ein weiteres Leitblech 20 und werden einem Überkehrsystem 21 zugeführt. In dem Überkehrsystem wird dieses Gut in als Wurfelevatoren ausgebildeten Nachdruscheinrichtungen 22 nachgedroschen und anschliessend von diesen Wurfelevatoren über Rohre 23 wieder auf den Vorbereitungsboden 12 zurückgeführt.

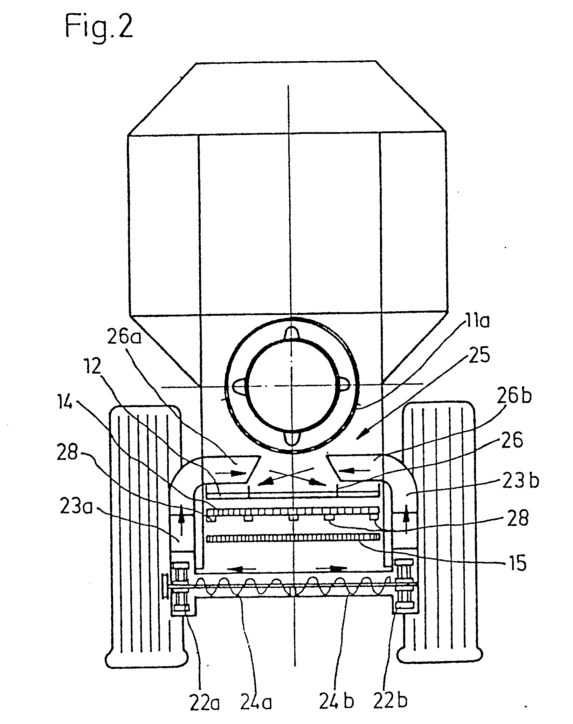

Wie aus Figur 2 hervorgeht, weist dieses Über- kehrsystem 21 eine rechtsdrehende Förder- schnecke 24a und eine linksdrehende Förderschnecke 24b auf, die jeweils über die halbe Breite des Siebkastens verlaufen und in die als Wurf- elevatoren ausgebildeten Nachdruscheinrichtun- gen 22a und 22b münden, die zu beiden Seiten der Dreschmaschine angeordnet sind. Von diesen führen jeweils die erwähnten Rohre 23a und 23b zurück in den Raum unterhalb der Axialdreschmaschine, d.h. in den Siebkasten 25. In den beiden Nachdruscheinrichtungen 22a und 22b werden die nur teilweise ausgedroschenen Ähren praktisch vollständig ausgedroschen. Körner, ausgedroschene Ähren und sonstige Verunreinigungen werden auf den Vorbereitungsboden zurückgeführt und nochmals durch die Siebanordnung geführt, wo eine endgültige Reinigung mit Hilfe des Gebläseluftstromes erfolgt. Durch ein solches Überkehrsystem wird sichergestellt, dass das Erntegut praktisch vollständig ausgedroschen wird.

Wie oben erwähnt, wird der Vorbereitungsboden und anschliessend auch die Siebanordnung nicht gleichmässig über deren Breite mit Gut beschickt, was zum einen an der ungleichförmigen Dreschrate der Axialdreschmaschine über die Dreschkorbbreite und zum anderen auch an der jeweiligen Seitenneigung des Mähdreschers liegt. So wird bei einer Seitenneigung etwa bei Hangarbeit das Korngut auf den Stufenboden und auf der Siebanordnung schon wegen der Rüttelbewegungen dieser Teile sich in Richtung auf die Talseite verschieben. Teilweise kann dieses verhindert werden durch sogenannte Hangleisten 26, die in Längsrichtung des Stufenbodens verlaufen und ein Rutschen des Korngutes zumindest teilweise verhindern. Bei Hangarbeit kommt jedoch hinzu, dass auch derjenigen Nachdruscheinrichtung des Überkehrsystems ein Grossteil des nachzudreschenden Gutes zugeführt wird, welche auf der Talseite liegt. Wird dann das in der Nachdruscheinrichtung behandelte Gut ohne weitere Vorkehrungen auf den Vorbereitungsboden zurückgeführt, so wird es dort ebenfalls an der Talseite abgelegt werden, so dass sich auf dieser Seite noch mehr Gut ansammelt. Diese Ungleichverteilung über die Breite des Vorbereitungsbodens und auch der Siebe bringt es mit sich, dass die Reinigung durch den Luftstrom nicht mehr so effektiv ist an den Stellen, an denen eine übergrosse Belastung der Siebe 14 und 15 auftritt. Der die Siebe 14 und 15 durchströmende Luftstrom wird sich den Weg geringeren Widerstandes wählen und effektiv nur diejenigen Bereiche auf den Sieben von Spreu etc. reinigen, in denen das Gut nur in einer dünneren Schicht liegt. Auf der Talseite hingegen wird die Reinigung nur unvollständig sein.

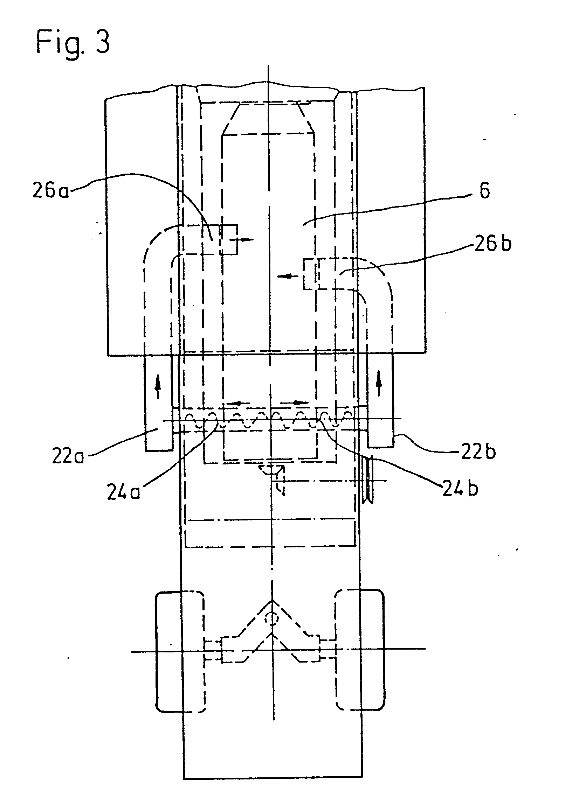

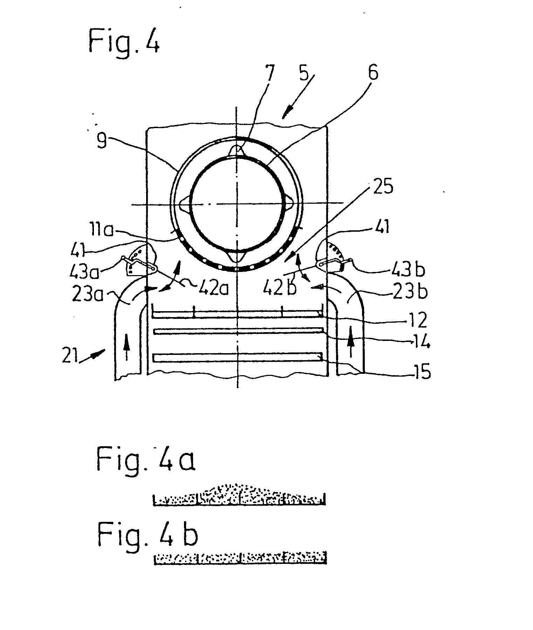

Wie aus Figur 2 hervorgeht, werden die Rohre 23a und 23b des linken bzw. rechten Überkehrsystems innerhalb des Siebkastens noch durch Leitrohre 26a und 26b verlängert, die sich jeweils in Richtung auf die gegenüberliegende Siebkastenwand erstrecken. Die Leitrohre 26a und 26b verlaufen, wie aus Figur 3 hervorgeht, etwa senkrecht zur Fahrzeuglängsachse und sind zueinander versetzt angeordnet, so dass die aus den Austrittsöffnungen austretenden Gutströme frei aneinander vorbeifliessen können. Die Anordnung solcher Leitrohre hat folgenden Sinn: Üblicherweise ist wie in Figur 4a schematisch dargestellt, die Belastung des Stufenbodens und auch der anschliessenden Siebanordnung an den beiden Seitenkanten zu gering. Durch die Leitrohre 26a und 26b des Doppelüberkehrsystems werden die Gutströme aus den Überkehrsystemen genau in diese Bereiche gelenkt, so dass sich insgesamt eine etwa gleichmässige Beschickung des Vorbereitungsbodens und der Siebanordnung ergibt. Diese gleichmässige Beschickung bleibt auch bei Hangarbeit des Mähdreschers erhalten. Neigt sich nämlich der in Figur 2 dargestellte Mähdrescher in der Zeichnung gesehen nach links, so wird ein grosser Teil des auf dem Leitblech 20 den Förderschnecken zugeführten Überkehrgutes in die Förderschnecke 24a der talseitigen Nachdruscheinrichtung gelangen. Nur ein geringerer Teil wird der hangseitigen Förderschnecke 24b zugeführt. Das in der Nachdruscheinrichtung 22a nachgedroschene Überkehrgut wird über das Rohr 23a und das Leitrohr 26a auf die Hangseite des Vorbereitungsbodens 12 geworfen, die durch den Hangbetrieb von der Dreschmaschine nur unzureichend mit Gut beschickt wird. Der geringe Überkehrstrom durch die rechte Nachdruscheinrichtung 22b erhöht die Belastung des Vorbereitungsbodens auf der Talseite nur unwesentlich. Um eine noch günstigere Verteilung des Überkehrgutstromes zu den beiden Nachdruscheinrichtungen 22a und 22b zu erzielen, ist es möglich, auf dem Leitblech 20 noch Führungsleisten 27 (Figur 1) vorzusehen, mit denen der Überkehrstrom gesteuert den beiden Nachdruscheinrichtungen zu ganz bestimmten Anteilen zugeführt werden kann. Die Stellung der Führungsbleche 27 kann über Handhebel 29 oder – hier nicht dargestellt – vom Führerhaus des Mähdreschers über geeignete Stellmittel erfolgen. Auch eine automatische Einstellung aufgrund der gemessenen ungleichförmigen Belastung des Vorbereitungsbodens und der Siebe ist möglich.

Hierzu werden über die Breite dieser Teile verteilt mehrere Druckaufnehmer 28 vorgesehen, von denen in Figur 2 nur einige Druckaufnehmer unterhalb des Siebes 14 gezeigt wird. Deren Ausgangssignale, die der segmentweisen Siebbelastung entsprechen, können zur Einstellung der Führungsbleche 27 benutzt werden.

In Figur 4 ist schematisch ein Querschnitt durch eine weitere Ausführungsform für eine Ausgleichseinrichtung zum gleichmässigen Beschicken des Vorbereitungsbodens und der Siebanordnung einer Axialdreschmaschine dargestellt. Auch diese Ausgleichseinrichtung weist ein Überkehrsystem entsprechend dem in Figur 2 gezeigten auf, von denen hier lediglich von den Wurfelevatoren bzw. Nachdruscheinrichtungen kommenden Rohre 23a und 23b gezeigt sind, die in den Siebkasten 25 oberhalb des Vorbereitungsbodens münden. Auch in diesem Falle ist die Axialdreschmaschine 5 mit dem Rotor 6, den Dreschleisten 7, dem Trommelgehäuse 9 sowie dem Dreschkorb 11 bzw. dem Trennsieb 11a, mittig in dem Siebkasten angeordnet. Die Anordnung des Vorbereitungsbodens 12 sowie der Siebe 14 und 15 und der anderen Leiteinrichtungen zu den Nachdruscheinrichtungen ist wie in Figur 1 gezeigt. Am oberen Ende der in den Siebkasten 25 mündenden Rohre 23a bzw. 23b sind um horizontale Achsen 41 Leitbleche bzw. Leitplatten 42a und 42b gelagert, die jeweils mit Hilfe eines aus dem Siebkasten 25 herausführbaren und verriegelbaren Handgriffes 43a bzw. 43b in Richtung der Doppelpfeile verstellt werden können. Der Verstellbereich für die Leitplatten 42 beträgt etwa 90° und ist so gewählt, dass die Austrittsöffnungen der Rohre 23 in der einen Endstellung nahezu verschlossen werden, während in der anderen Endstellung die Leitplatten etwa parallel zu dem Vorbereitungsboden und der Siebanordnung stehen. Die Leitbleche 42a und 42b können individuell so eingestellt werden, dass die von dem Überkehrsystem 21 über die beiden Rohre 23a und 23b gelieferten Gutströme jeweilig auf Bereiche oder einem gemeinsamen Bereich gelenkt werden, wo die Beschickung durch die Axialdreschmaschine ungleichmässig ist. Hiermit können ungleichmässige Beschickungen der Nachbereitungseinrichtung, die von verschiedenen Parametern abhängig sind, durch individuelle Einstellung der Leitbleche ausgeglichen werden. Eine Nachsteuerung der Leitbleche, z.B. in Abhängigkeit der Hanglage ist selbstverständlich möglich. Bei dem gezeigten Beispiel in Figur 4 ist die Leitplatte 42a des in der Figur linken Überkehrsystems relativ stark in Richtung auf den Vorbereitungsboden geneigt, während die Leitplatte 42b des rechten Systems annähernd parallel zum Vorbereitungsboden steht. Demnach werden die Gutströme aus den beiden Rohren 23a und 23b jeweils in den in Figur 4 linken Bereich des Vorbereitungsbodens gelenkt. Eine solche Einstellung könnte z.B. einer extremen Seitenneigung des Mähdreschers nach rechts entsprechen.

Die Nachführung der Leitplatten 42 kann mit Hilfe eines einfachen mechanischen Pendels geschehen, durch die die Platten automatisch eingestellt werden. Eine Einstellung vom Fahrerhaus sowie eine automatische Einstellung sind ebenso wie bei dem vorherigen Ausführungsbeispiel möglich. Auch wenn in dieser Figur die Rohre 23a und 23b praktisch kaum in dem Siebkasteninnenraum gezogen sind, da die Führung der Gutströme von den Leitblechen übernommen wird, so ist auch eine Führung dieser Rohre bis in eine gewisse Tiefe des Siebbodens möglich. Die beiden Rohre sind wiederum versetzt angeordnet, so dass sich die abgegebenen Gutströme nicht gegenseitig behindern. Erreicht wird bei entsprechender Steuerung in Abhängigkeit der ungleichförmigen Beschickung des Vorbereitungsbodens und der Siebanordnung, wie sie etwa in Figur 4a dargestellt wird, eine annähernd gleichmässige Belastung entsprechend Figur 4b.

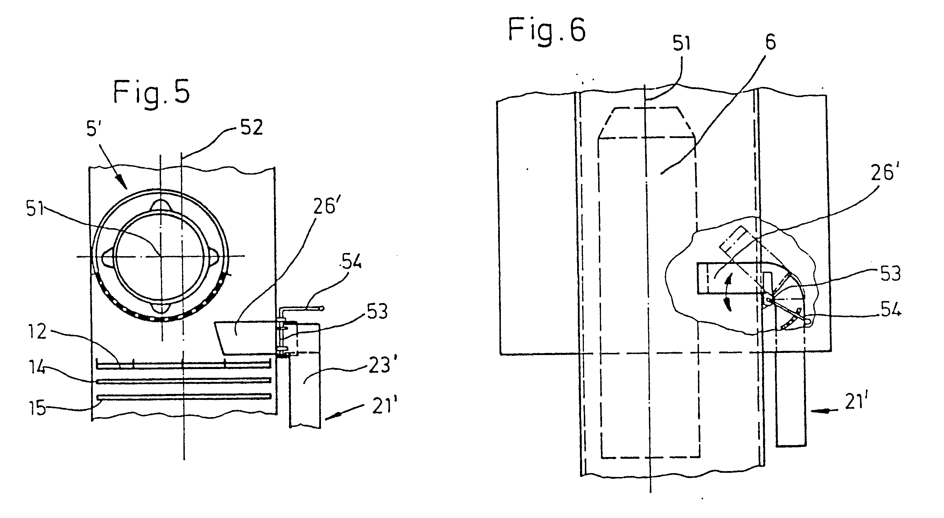

In den Figuren 5 und 6 ist eine weitere Ausführungsform für eine Ausgleichseinrichtung zum gleichmässigen Beschicken von Vorbereitungsboden und Siebanordnung einer Axialdreschmaschine dargestellt. Hier ist die Dreschtrommel 5' unsymmetrisch in dem Siebkasten angeordnet, und zwar zur in der Figur 5 linken Seitenwand verschoben. Die Achse 51 der Dreschtrommel verläuft daher links von der mittleren Vertikalebene 52 des Siebkastens 25. Ansonsten ähnelt diese Dreschmaschine im Aufbau der Nachbereitungseinrichtung mit dem Vorbereitungsboden 12 und den Sieben 14 und 15 dem in Figur 1 dargestellten Mähdrescher.

Auch bei dieser Dreschmaschine ist ein Überkehrsystem 21' vorgesehen, von dem hier lediglich das in den Siebkasten führende Rohr 23' gezeigt ist. Das Überkehrsystem 21 weist ebenfalls eine Nachdruscheinrichtung, etwa in Form eines Wurfelevators, dem das Überkehrgut von einer einzigen, über die gesamte Breite des Siebkastens verlaufende Förderschnecke zugeführt wird.

Das in den Siebkasten mündende Rohr 23' des Überkehrsystems 21' ist mit Hilfe eines Leitstückes 26', z.B. in Form eines Rohres oder eines einseitig offenen U-Trägers verlängert. Dieses Leitstück 26' ist um eine vertikale Achse 53 schwenkbar. Die Achse 53 ist dabei im inneren Krümmungsbereich des Rohres 23' vor Erreichen des Siebkastens 25 angeordnet. Das Leitstück 26', das in Richtung des Doppelpfeiles, wie in Figur 6 dargestellt, um die Achse 53 schwenkbar ist, ist derart ausgebildet, dass es beim Verschwenken über das Rohr 23' hinweggeschoben wird. In der strichpunktiert gezeigten Lage befindet sich das Leitrohr in seiner vordersten Schwenkstellung. Der Überkehrgutstrom wird im wesentlichen längs der äusseren Krümmungswand des Leitstückes in den Siebkasten auf dem Vorbereitungsboden 12 gelenkt. Der Schwenkbereich des Leitstücks 26 ist so gewählt, dass in einer Endstellung das Leitstück 26' etwa senkrecht zur Längsachse des Mähdreschers in den Siebkasten mündet, wohingegen es in der anderen Endstellung einen möglichst spitzen Winkel mit der hier rechten Seitenwand des Siebkastens 25 einnehmen soll. Bei dem Ausführungsbeispiel beträgt dieser Winkel etwa 45°.

Durch Verschwenken des Leitstücks 26' kann der Überkehrgutstrom über einen weiten Bereich des Vorbereitungsbodens 12 verteilt werden. In Verbindung mit der asymmetrischen Lage der Dreschtrommel kann auf diese Weise eine hohe Gleichverteilung des Gutes auf dem Vorbereitungsboden erzielt werden. Auch bei dieser Ausführungsform kann eine ungleichmässige Verteilung bei Seitenhangbetrieb durch entsprechende Verstellung des Leitstückes 26' ausgeglichen werden.

Die Verstellung des Leitstücks bzw. Leitrohres erfolgt entweder wiederum von Hand mit Hilfe eines in Figur 5 nur schematisch angedeuteten und verriegelbaren Handgriffs 54, vom Führerhaus aus oder automatisch aufgrund bestimmter Betriebsparameter, wie Neigung des Mähdreschers, Belastung des Vorbereitungsbodens und der Siebe etc.

**Patentansprüche**

1. Mähdrescher mit einer Axialdreschmaschine (5) zum Ausdreschen von Erntegut, einem eine Nachbereitungseinrichtung (12, 14, 15, 19) enthaltenden Siebkasten (25) zum Auffangen, Sieben und Reinigen des ausgedroschenen Gutes, sowie einer Einrichtung zur gleichmässigen Belegung der Nachbereitungseinrichtung (12, 14, 15, 19) mit ausgedroschenem Gut, dadurch gekennzeichnet, dass die Einrichtung eine Rückführeinrichtung (Überkehrsystem (21) mit einer Nachdruscheinrichtung (22) zum Nachdreschen von in der Nachbereitungseinrichtung (12, 14, 15, 19) nur teilweise gereinigtem Erntegut und zum Rückführen des nachgedroschenen Gutes zu der Nachbereitungseinrichtung (12, 14, 15, 19) aufweist, und dass das Überkehrsystem (21) eine oberhalb der Nachbereitungseinrichtung (12, 14, 15, 19) aus der Seitenwand oder den Seitenwänden des Siebkastens (25) herausragende Leitvorrichtung (26a, 26b, 26', 42a, 42b) aufweist, mittels der das rückgeführte Gut gesteuert auf diejenigen Bereiche der Nachbereitungseinrichtung abgelegt wird, die von der Axialdreschmaschine (5) nur unzureichend beschickt werden.

2. Mähdrescher nach Anspruch 1, dadurch gekennzeichnet, dass das Überkehrsystem (21) zu beiden Seiten der Dresch- und Trenneinheit (5) je eine Nachdruscheinrichtung (22a, 22b) aufweist, von denen das nachgedroschene Gut zurück in die Nachbereitungseinrichtung (12, 14, 15, 19) über Rohre (23a, 23b) geführt ist, und dass die Rohre als Leitvorrichtung (Leitrohre 26a, 26b) in Richtung auf die gegenüberliegende Seitenwand der Nachbereitungseinrichtung (Vorbereitungsboden (12) verlängert sind, um in diesen Bereichen das nachgedroschene Gut abzulegen, wobei die Leitrohre (26a, 26b) sich etwa horizontal, jedoch senkrecht zu der Längsachse des Mähdreschers erstrecken und versetzt zueinander angeordnet sind.

3. Mähdrescher nach einem der vorhergehenden Ansprüche, dadurch gekennzeichnet, dass als Leitvorrichtung für das Überkehrsystem (21) Leitplatten (42a, 42b) an den Austrittsöffnungen des Überkehrsystems zur Steuerung des überkehrten Stromes vorgesehen sind.

4. Mähdrescher nach Anspruch 3, dadurch gekennzeichnet, dass das Überkehrsystem (21) an jeder Seite der Dresch- und Trenneinrichtung eine Nachdruscheinrichtung (22a, 22b) aufweist, von denen jeweils ein Rohr (23a, 23b) in den Siebkasten (25) auf derselben Seite münden.

5. Mähdrescher nach Anspruch 4, dadurch gekennzeichnet, dass zum Zuführen des Überkehrgutstromes in die Nachdruscheinrichtung (22a, 22b) jeweils eine links- und bzw. rechtsdrehende Förderschnecke (24a, 24b) vorgesehen ist.

6. Mähdrescher nach Anspruch 5, dadurch gekennzeichnet, dass zur Steuerung des Überkehrgutstromes zu einer der Förderschnecke (24a, 24b) ein Gutstromverteiler (Führungsleisten 27) vorgesehen ist.

7. Mähdrescher nach Anspruch 1, dadurch gekennzeichnet, dass bei einer Axialdresch- und Trenneinrichtung mit einer im Hinblick zu dem Siebkasten (25) aussermittig gelegenen Dreschtrommel (5') an der gegenüberliegenden Wand des Siebkastens (25) die Mündung eines einzigen Überkehrsystem (21) gelegen ist und dass diese Mündung mit einem Leitstück (26') versehen ist, das um eine vertikale Achse (53) im Hinblick auf den Siebkastenboden verschwenkbar ist.

8. Mähdrescher nach einem der vorhergehenden Ansprüche, dadurch gekennzeichnet, dass die Leitvorrichtung (Führungsleisten 27, Leitplatten 42, Führungsrohr 26') automatisch aufgrund von der Belastung der Nachdruscheinrichtung entsprechenden Signalen (Druckaufnehmer 28) zur Erzielung einer gleichmässigen Verteilung des Gutes über die Breite der Nachdruscheinrichtung (12, 14, 15) einstellbar ist.

**Claims**

1. A combine-harvester comprising an axial thresher (5) for threshing out crops, a sieve pan (25) containing a processing means (12, 14, 15, 19) for collecting, sieving and cleaning the threshed out crop, and a means for evenly supplying the processing means (12, 14, 15, 19) with threshed out crop, characterized in that the means comprises a recycling means (returns system (21) having a rethreshing means (22) for rethreshing crop which has only been partly cleaned in the processing means (12, 14, 15, 19), and for returning the rethreshed crop to the processing means (12, 14, 15, 19), and in that the returns system (21) has a guiding means (26a, 26b, 26', 42a, 42b) protruding above the processing means (12, 14, 15, 19) out of the side wall or side walls of the sieve pan (25), the returned crop being deposited in controlled fashion by means of said guiding means on those areas of the processing means which are charged insufficiently by the axial thresher (5).

2. The combine-harvester according to claim 1, characterized in that the returns system (21) has on each side of the threshing and separating unit (5) a rethreshing means (22a, 22b) from which the rethreshed crop is directed back to the processing means (12, 14, 15, 19) via pipes (23a, 23b), and in that the pipes are extended as a guiding means (guiding pipes 26a, 26b) in the direction of the opposite side wall of the processing means (preparation pan (12)) in order to deposit the rethreshed crop in these areas, the guiding pipes (26a, 26b) extending substantially horizontally but perpendicular to the longitudinal axis of the combineharvester and being mutually staggered.

3. The combine-harvester according to either of the above claims, characterized in that guiding plates (42a, 42b) are provided at the discharge openings of the returns system as a guiding means for the returns system (21) for controlling the returned stream.

4. The combine-harvester according to claim 3, characterized in that the returns system (21) has on each side of the threshing and separating means a rethreshing means (22a, 22b) from each of which a pipe (23a, 23b) opens into the sieve pan (25) on the same side.

5. The combine-harvester according to claim 4, characterized in that a left-rotating and a right-rotating feed auger (24a, 24b) are each provided for feeding the returned crop stream to the rethreshing means (22a, 22b).

6. The combine-harvester according to claim 5, characterized in that a crop stream distributor (guide bars 27) is provided to control the returned crop stream to one of the feed augers (24a, 24b).

7. The combine-harvester according to claim 1, characterized in that in an axial threshing and separating means having a threshing drum (5') located off-center with respect to the sieve pan (25), the opening of single returns system (21) is located on the opposite wall of the sieve pan (25), and in that this opening is provided with a guiding member (26') which is pivotable about a vertical axle (53) with respect to the sieve pan floor.

8. The combine-harvester according to any of the above claims, characterized in that the guiding means (guide bars 27, guiding plates 42, guide pipe 26') is adjustable automatically due to signals corresponding to the load on the rethreshing means (pressure sensors 28) to achieve an even distribution of the crop over the width of the rethreshing means (12, 14, 15).

**Revendications**

1. Moissonneuse-batteuse avec une batteuse axiale (5) pour le battage de produit de récolte, un caisson de criblage (25) contenant un dispositif de post-traitement (12, 14, 15, 19) pour la réception, le criblage et le nettoyage du produit battu ainsi qu'avec un dispositif pour le garnissage uniforme du dispositif de post-traitement (12, 14, 15, 19) avec du produit battu, caractérisée en ce que le dispositif comprend un dispositif de retour (système de transfert (21) avec un dispositif de post-battage (22) pour le rebattage de produit de récolte seulement partiellement nettoyé dans le dispositif de post-traitement (12, 14, 15, 19) et pour le retour du produit rebattu vers le dispositif de post-traitement (12, 14, 15, 19) et en ce que le système de transfert (21) comporte un dispositif directeur (26a, 26b, 26', 42a, 42b) dépassant en saillie de la paroi latérale ou des parois latérales du caisson de criblage (25) et au moyen duquel le produit ramené est déposé de façon commandée sur les zones du dispositif de post-traitement qui ne sont qu'insuffisamment alimentées par la batteuse axiale (5).

2. Moissonneuse-batteuse selon la revendication 1, caractérisée en ce que le système de transfert (21) comporte, des deux côtés de l'unité de battage et de séparation (5), respectivement un dispositif de post-battage (22a, 22b) par lesquels le produit rebattu est ramené dans le dispositif de post-traitement (12, 14, 15, 19) par l'intermédiaire de tubes (23a, 23b) et en ce que les tubes sont prolongés sous forme de dispositif directeur (tubes directeurs 26a, 26b) en direction de la paroi latérale opposée du dispositif de post-traitement (table de préparation (12), pour déposer, dans ces régions, le produit rebattu, les tubes directeurs (26a, 26b) s'étendant sensiblement horizontalement mais perpendiculairement à l'axe longitudinal de la moissonneuse-batteuse et étant disposés en étant décalés l'un par rapport à l'autre.

3. Moissonneuse-batteuse selon l'une des revendications précédentes, caractérisée en ce que comme dispositif directeur pour le système de transfer (21) sont prévues des plaques déflectrices (42a, 42b) aux orifices de sortie du système de transfert pour la commande du courant transféré.

4. Moissonneuse-batteuse selon la revendication 3, caractérisée en ce que le système de transfert (21) comporte, de chaque côté di dispositif de battage et de séparation, un dispositif de post-battage (22a, 22b) dont respectivement un tube (23a, 23b) débouche dans le caisson de criblage (25) sur le même côté.

5. Moissonneuse-batteuse selon la revendication 4, caractérisée en ce que pour l'amenée du courant de produit de transfert dans le dispositif de post-battage (22a, 22b) sont prévues deux vis transporteuses sans fin (24a, 24b) tournant respectivement à gauche et à droite.

6. Moissonneuse-batteuse selon le revendication 5, caractérisée en ce que pour la commande du courant de produit de transfert en direction de l'une des vis transporteuses sans fin (24a, 24b) est prévu un répartiteur de courant de produit (barres de guidage 27).

7. Moissonneuse-batteuse selon la revendication 1, caractérisée en ce que, dans un dispositif de battage axial et de séparation avec un tambour batteur (5') placé excentriquement par rapport au caisson de criblage (25), l'embouchure d'un système de transfert unique (21) est située sur la paroi opposée du caisson de criblage (25) et en ce que cette embouchure est pourvue d'un tronçon directeur (26') qui peut pivoter relativement au plancher du caisson de criblage autour d'un axe vertical (53).

8. Moissonneuse-batteuse selon l'une des revendications précédentes, caractérisée en ce que le dispositif directeur (barres de guidage 27), plaques déflectrices (42), tube de guidage (26') est réglable automatiquement sur la base de signaux (capteurs de pression 28) correspondant à la charge du dispositif de post-battage pour l'obtention d'une répartition uniforme du produit sur la largeur du dispositif de post-battage (12, 14, 15).

Fig. 1

## Fig.2

# Fig. 3

# Fig. 4

# Fig. 4a

# Fig. 4 b

# Fig.5

# Fig.6

0 091 538